# EUROPÄISCHE PATENTSCHRIFT

(11) **EP 1 344 037 B1**
(45) Veröffentlichungstag und Bekanntmachung des Hinweises auf die Patenterteilung: **12.04.2006**
(21) Anmeldenummer: 01971689.3
(22) Anmeldetag: 04.09.2001
(51) Int. Cl.: G01L 23/22

(54) **SCHWINGUNGSAUFNEHMER BZW. ISOLIERSCHEIBE FÜR EINEN SCHWINGUNGSAUFNEHMER**
VIBRATION PICKUP AND AN INSULATING DISK FOR A VIBRATION PICKUP
CAPTEUR D'OSCILLATIONS ET PLAQUE ISOLANTE DESTINEE A UN CAPTEUR D'OSCILLATIONS

(30) Priorität: 08.09.2000 DE 10044478
(43) Veröffentlichungstag der Anmeldung: 17.09.2003
(73) Patentinhaber: ROBERT BOSCH GMBH, 70442 Stuttgart (DE)
(72) Erfinder: MUELLER, Wolfgang-Michael, 71277 Rutesheim (DE); SCHMIDT, Wolfgang, 71665 Vaihingen (DE); KREBS, Holger, 71729 Erdmannhausen (DE); BRAMMER, Hartmut, 71665 Vaihingen (DE)
(86) Internationale Anmeldenummer: PCT/DE2001/003363
(87) Internationale Veröffentlichungsnummer: WO 2002/021095

(56) Entgegenhaltungen:
- DE-A- 4 123 786
- DE-A- 4 403 660
- US-A- 4 869 095

## Beschreibung

### Stand der Technik

Die vorliegende Erfindung betrifft einen Schwingungsaufnehmer gemäß dem Oberbegriff des Patentanspruchs 1.

Schwingungsaufnehmer sind in unterschiedlichen Ausgestaltungen bekannt. Beispielsweise offenbart die DE-44 03 660 einen Schwingungsaufnehmer mit einer Druckhülse, welcher bei Klopfsensoren für Verbrennungsmotoren Verwendung findet. Bei dem bekannten Schwingungsaufnehmer wird eine Druckhülse über einen Anlagebereich fest an das Bauteil angefügt, dessen Schwingungen detektiert werden sollen. Die hier zu detektierenden Schwingungen sind Klopfgeräusche des Verbrennungsmotors im Betrieb, welche über die Druckhülse auf einen piezokeramischen Schwingungsaufnehmer als Klopfsensor geleitet werden und in ein auswertbares Ausgangssignal umgewandelt werden.

Aus der US 4 869 095 ist ein Klopfsensor mit einer Druckhülse und einer isolierenden Hülse bekannt, die um einen zylindrischen Abschnitt der Druckhülse angeordnet ist. Der äußerste Teil der Hülse dient als Bezugsmaß für die Anordnung der zu montierenden Komponenten, in Ausrichtung gegenüber dem zylindrischen Abschnitt beim Zusammenbau des Klopfsensors.

Aus der DE-41 23 786 ist Klopfsensor für eine Brennkraftmaschine bekannt. Wie schematisch in Figur 7 dargestellt, weist der Klopfsensor eine in einem Gehäuse (nicht gezeigt) angeordnete Druckhülse 2 auf, deren Außenseite eine piezokeramische Scheibe 3 und eine seismische Masse 4 aufweist. Die seismische Masse 4 wirkt über ein Federelement 5, welches mittels eines Gewinderings 6 vorgespannt werden kann, auf die piezokeramische Scheibe 3. Wie in Figur 7 gezeigt, ist die piezokeramische Scheibe 3 zwischen zwei Kontaktscheiben 7 angeordnet, welche über einen integrierten Anschlussstecker (nicht dargestellt) Signale an eine Auswerteeinheit abgeben. Um eine ausreichende Isolation zu gewährleisten, sind an den Außenseiten der Kontaktscheiben 7 jeweils Isolierscheiben 8 angeordnet.

Es ist jedoch möglich, dass kleine Späne 9 (Flitter) in den Zwischenraum zwischen der Druckhülse 2 und der piezokeramischen Scheibe 3 geraten können. Diese können beispielsweise beim Aufschrauben des Gewinderings 6 oder beim Kunststoffspritzen des Gehäuses 10 an diese Stellen gespült werden. Dadurch kann sich eine Verbindung zwischen der piezokeramischen Scheibe 3 und der Druckhülse und/oder der seismischen Masse ergeben, wodurch Kurzschlüsse zustande kommen. Die Isolierscheiben gemäß dem Stand der Technik haben den gleichen Innendurchmesser wie die piezokeramische Scheibe und die seismische Masse. Dadurch sind die Abstände zwischen den Einzelteilen und der Druckhülse 2 konstant. Um eine Kurzschlussbildung zu vermeiden, könnten die Isolierscheiben so dick gemacht werden, dass die kleinen Späne keine Möglichkeit haben, eine Verbindung zwischen den Kontaktscheiben 7 und der seismischen Masse 4 bzw. der Druckhülse 2 herzustellen. Dies ist jedoch insbesondere aus akustischen Gründen nachteilig, da die Schwingungen dann nicht mehr optimal aufgenommen werden können.

### Vorteile der Erfindung:

Der erfindungsgemäße Schwingungsaufnehmer zur mittelbaren oder unmittelbaren Befestigung an einem Schwingungen aufweisenden Bauteil mit den Merkmalen des Patentanspruchs 1 hat dem gegenüber den Vorteil, dass auf einfache Weise eine Kurzschlussbildung zwischen Kontaktscheiben bzw. einer piezoelektrischen Scheibe und einer seismischen Masse bzw. einer Druckhülse verhindert werden können. Dies wird erfindungsgemäß dadurch erreicht, dass ein Innendurchmesser der Isolierscheibe kleiner als ein Außendurchmesser eines zylinderförmigen Bereichs der Druckhülse ist. Dabei wird der Innendurchmesser der Isolierscheibe derart gewählt, dass er trotzdem problemlos auf die Druckhülse aufgefädelt werden kann. Nach dem Auffädeln der Isolierscheibe auf die Druckhülse steht der innere Umfangsrand der Isolierscheibe aus der Ebene der Isolierscheibe vor, sodass der innere Umfangsrand zumindest teilweise zwischen den Kontakt verursachenden Bauteilen angeordnet ist. Dadurch wird die Isolation des Schwingungsaufnehmers deutlich verbessert und auch eine Isolation bei einem Feuchteeinfluss verbessert.

Vorzugsweise weist die Isolierscheibe mindestens einen Schlitz am Innendurchmesser auf, welcher eine vorbestimmte Länge aufweist. Dadurch ergibt sich zum Einen ein einfaches Einfädeln der Isolierscheibe an der Druckhülse, zum Anderen wird ein Aufrichten des inneren Umfangsbereichs der Isolierscheibe aus der Ebene der Isolierscheibe unterstützt.

Gemäß einer weiteren Ausgestaltung der vorliegenden Erfindung weist die Isolierscheibe einen Schlitz auf, welcher von ihrem Innendurchmesser bis zu ihrem Außendurchmesser durchgehend ausgebildet ist. Dadurch weitet sich die Isolierscheibe beim Auffädeln auf die Druckhülse und schließt sich aufgrund ihrer Eigenelastizität selbständig wieder, wenn sie ihre endgültige Montageendposition erreicht hat. Zwar verbleibt bei dieser Ausgestaltung ein kleiner Schlitz, welcher nach Umspritzen des Gehäuses nur durch den Spritzkunststoff isoliert ist, aber im Vergleich mit der bisherigen Situation im Stand der Technik ist der kritische Volumenanteil mit einer Kurzschlussmöglichkeit jedoch deutlich geringer.

Um eine einfache Herstellbarkeit des Schlitzes der Isolierscheibe zu gewährleisten, ist der Schlitz vorzugsweise V-förmig ausgebildet.

Um ein besonders einfaches Auffädeln der Isolierscheibe auf die Druckhülse zu ermöglichen, verläuft der Schlitz der Isolierscheibe in Richtung einer Mittellinie der Isolierscheibe.

Ein einfaches Auffädeln der Isolierscheibe auf die Druckhülse kann ebenfalls dadurch erreicht werden, dass die Isolierscheibe vorzugsweise eine ringförmig umlaufende Kante aufweist, so dass der innere Umfangsrand der Isolierscheibe, in welchem einer oder mehrere Schlitze gebildet sind, aus der Ebene der Isolierscheibe vorsteht. Dadurch wird auch erreicht, dass sich die derart ausgebildete Isolierscheibe einfacher zwischen der piezoelektrischen Scheibe und der Druckhülse anordnet.

Gemäß einer weiteren bevorzugten Ausgestaltung der vorliegenden Erfindung ist an einem Übergangsbereich der Druckhülse zwischen einem zylinderförmigen Bereich und einem flanschartigen Rand ein kegelförmiger Bereich gebildet. Dieser kegelförmige Bereich unterstützt eine Zentrierung der auf die Druckhülse aufgefädelten Elemente und hält diese auch beim Spritzen des Gehäuses mit Kunststoff in ihrer Lage. Weiter unterstützt der kegelförmige Bereich der Druckhülse die Anordnung der Isolierscheibe, genauer des inneren Umfangsrand der Isolierscheibe zwischen der Druckhülse und den Kontaktelementen des Schwingungsaufnehmers. Somit passt sich die erfindungsgemäße Isolierscheibe dem kegelförmigen Bereich der Druckhülse an. Aufgrund des Vorsehens von Schlitzen im inneren.Randbereich wird vorteilhaft zusätzlich noch erreicht, dass sich die durch die einzelnen Schlitze getrennten Teilbereiche des inneren Randbereichs zumindest teilweise überlappen. Dadurch wird die Isolation noch sicherer.

Um eine noch bessere Anpassung der Isolierscheibe an den kegelförmigen Bereich der Druckhülse zu ermöglichen, weist die Isolierscheibe vorzugsweise zwei ringförmig umlaufende Kanten auf, welche zwischen sich einem kegelförmigen Bereich bilden. Besonders bevorzugt weist der kegelförmige Bereich der Isolierscheibe die gleiche Steigung wie der kegelförmige Bereich der Druckhülse auf. Dadurch kann ein enges Anliegen der Isolierscheibe an der Druckhülse sichergestellt werden.

Vorzugsweise sind die beiden Isolierscheiben des Schwingungsaufnehmers gleich ausgebildet. Dadurch kann eine gleichmäßige Isolierung an allen Bereichen des Schwingungsaufnehmers erreicht werden.

Besonders bevorzugt weist die Isolierscheibe eine gerade Anzahl von Schlitzen, beispielsweise acht Schlitze auf, welche symmetrisch an der Isolierscheibe verteilt sind.

vorzugsweise können die Isolierscheiben auch derart ausgebildet sein, dass sie einen größeren Außendurchmesser als die Kontaktscheiben bzw. die piezoelektrische Scheibe aufweisen. Dadurch wird auch die Isolation am äußeren Bereich der piezoelektrischen Scheibe verbessert. Dabei ist es auch denkbar, den äußeren Umfangsbereich der Isolierscheibe in eine Richtung umzubiegen.

Erfindungsgemäß wird somit ein Schwingungsaufnehmer mit einer verbesserten Isolationswirkung insbesondere hinsichtlich einer leitenden Verbindung aufgrund von Spänen oder Flitter bzw. aufgrund von Feuchtigkeit bereit stellt. Dies kann durch die besonders einfache Maßnahme eines kleineren Innendurchmessers der Isolierscheibe im Vergleich mit einem Außendurchmesser eines zylinderförmigen Bereichs einer Druckhülse des Schwingungsaufnehmers erreicht werden. Dadurch lassen sich auf einfache und überraschende Weise eine verbesserte Isolationswirkung erreichen, welche keine bzw. nur in geringem Maße zusätzliche Kosten bei der Herstellung und Montage nach sich ziehen.

### Zeichnung:

Mehrere Ausführungsbeispiele der Erfindung sind in der Zeichnung dargestellt und werden in der nachfolgenden Beschreibung näher erläutert.

### Es zeigen:

- Figur 1: eine schematische Schnittansicht eines Schwingungsaufnehmers mit einer Isolierscheibe gemäß einem ersten Ausführungsbeispiel der vorliegenden Erfindung;
- Figur 2: eine schematische Draufsicht der in Figur 1 dargestellten Isolierscheibe;
- Figur 3: eine schematische Draufsicht auf eine Isolierscheibe gemäß einem zweiten Ausführungsbeispiel der vorliegenden Erfindung;
- Figur 4: eine Schnittansicht einer Isolierscheibe gemäß einem dritten Ausführungsbeispiel der vorliegenden Erfindung;
- Figur 5: eine schematische Schnittansicht eines Schwingungsaufnehmers mit einer Isolierscheibe gemäß einem vierten Ausführungsbeispiel der vorliegenden Erfindung;
- Figur 6: eine Schnittansicht der in Figur 5 dargestellten Isolierscheibe und
- Figur 7: einen Schwingungsaufnehmer mit einer Isolierscheibe gemäß dem Stand der Technik.

### Beschreibung der Ausführungsbeispiele

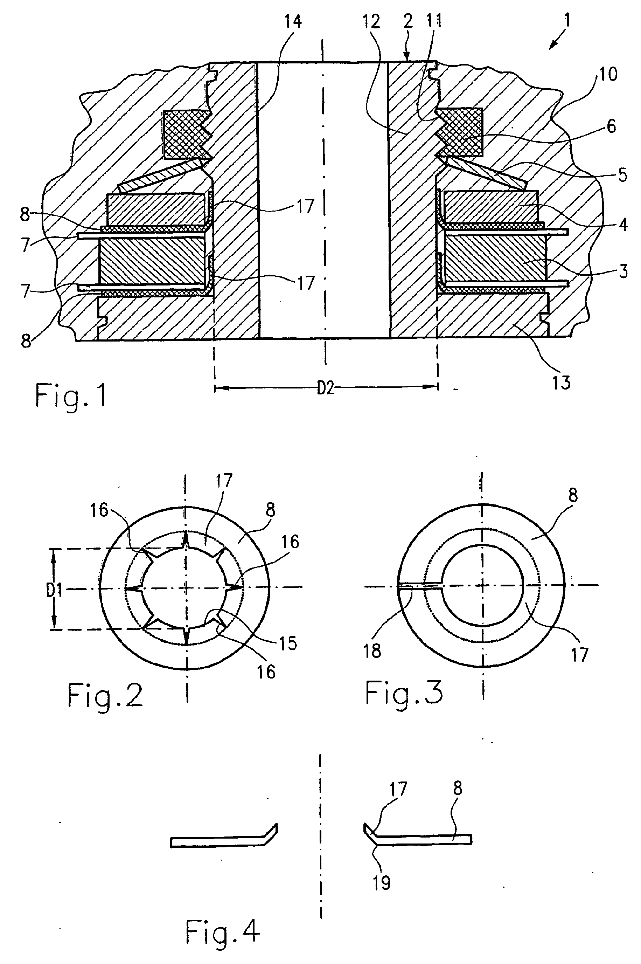

In den Figuren 1 und 2 ist ein Schwingungsaufnehmer bzw. eine Isolierscheibe gemäß einem ersten Ausführungsbeispiel der vorliegenden Erfindung dargestellt.

Wie in Figur 1 gezeigt, umfasst der Schwingungsaufnehmer 1 ein Gehäuse 10, mit einer darin angeordneten Druckhülse 2. Die Druckhülse 2 besteht aus einem zylinderförmigen Bereich 12 und einem flanschartigen Bereich 13 und weist eine zentrale Bohrung 14 sowie ein Außengewinde 11 auf, welches am zylinderförmigen Bereich 12 angeordnet ist. Weiter umfasst der Schwingungsaufnehmer 1 eine piezoelektrische Scheibe 3, eine seismische Masse 4, eine Tellerfeder 5 und einen Gewindering 6.

Wie in Figur 1 gezeigt, ist die piezoelektrische Scheibe 3 zwischen zwei Kontaktscheiben 7 angeordnet, welche über einen integrierten Anschlussstecker mit einer Auswerteeinheit (beide nicht dargestellt) zur Aufnahme der von der piezoelektrischen Scheibe abgegebenen Signale verbunden ist.

Nachfolgend wird die zwischen der piezoelektrischen Scheibe 3 und der seismischen Masse 4 angeordnete Kontaktscheibe 7 als obere Kontaktscheibe bezeichnet und die zwischen der piezoelektrischen Scheibe 3 und dem flanschartigen Bereich 13 der Druckhülse 2 angeordnete Kontaktscheibe 7 als untere Kontaktscheibe bezeichnet.

Wie in Figur 1 gezeigt, ist zwischen der unteren Kontaktscheibe 7 und dem flanschartigen Bereich 13 eine erste Isolierscheibe 8 angeordnet. Weiter ist zwischen der oberen Kontaktscheibe 7 und der seismischen Masse 4 eine zweite Isolierscheibe 8 angeordnet. Die beiden Isolierscheiben 8 verhindern eine elektrische Verbindung zwischen den Kontaktscheiben 7 bzw. der piezoelektrischen Scheibe 3 und der Druckhülse 2 bzw. der seismischen Masse 4 und der Druckhülse 2, wodurch ein Kurzschluss entstehen könnte.

Wie in Figur 2 gezeigt, sind die Isolierscheiben 8 derart ausgebildet, dass sie an ihrem inneren Umfang 15 mehrere Schlitze 16 aufweisen. Im vorliegenden Ausführungsbeispiel sind acht Schlitze 16 am inneren Umfang 15 gebildet, welche jeweils voneinander gleich beabstandet sind. Die Schlitze 16 sind jeweils in Richtung einer Mittellinie der Isolierscheibe 8 verlaufend ausgebildet und weisen eine V-Form auf. Somit weist die Isolierscheibe 8 einen Innendurchmesser D1 auf, welcher kleiner als ein Außendurchmesser D2 des zylinderförmigen Bereichs 12 der Druckhülse 2 ist. Durch das Vorsehen der Schlitze 16 am inneren Umfang 15 der Isolierscheibe 8 kann diese einfach über die Druckhülse 2 gefädelt werden.

Wie in Figur 1 gezeigt, legt sich die Isolierscheibe 8 im montierten Zustand mit ihrem inneren Umfangsbereich 17 teilweise an den zylinderförmigen Bereich 12 der Druckhülse 2 an. Dabei steht der innere Umfangsbereich 17 aus der Ebene der Isolierscheibe 8 vor. Dadurch wird eine verbesserte Isolation zwischen den einzelnen Teilen erreicht. Insbesondere können dadurch Kurzschlüsse aufgrund von Spänen o.ä. verhindert werden.

Wie im montierten Zustand in Figur 1 dargestellt, werden die Einzelteile alle über den zylinderförmigen Bereich 12 der Druckhülse 2 eingefädelt und zum Schluss der Gewindering 6 auf das Außengewinde 11 aufgeschraubt, wobei die Vorspannung der Tellerfeder 5 auf die seismische Masse 4 eingestellt wird. Anschließend wird das Gehäuse 11 aus Kunststoff um das montierte Halbteil gespritzt, wobei der Kunststoff zusätzlich zur Isolation zwischen den leitenden Teilen dient. Somit ist insbesondere aufgrund des inneren Umfangsbereichs 17, welcher im montierten Zustand aus der Ebene der Isolierscheibe 8 vorsteht, eine verbesserte Isolation erreicht.

In Figur 3 ist eine Isolierscheibe 8 gemäß einem zweiten Ausführungsbeispiel der vorliegenden Erfindung dargestellt. Wie in Figur 3 gezeigt, weist die zweite Isolierscheibe 8 einen durchgehenden Schlitz 18 auf, welcher durch den vom Innenumfang zum Außenumfang der Isolierscheibe 8 gebildet ist. Dadurch ist es möglich, dass sich die Isolierscheibe 8 beim Montieren insbesondere über das Außengewinde 11 des zylinderförmigen Bereichs 12 der Druckhülse 2 weitet und anschließend wieder zusammenzieht und dabei wie die Isolierscheibe des ersten Ausführungsbeispiels einen inneren Umfangsbereich 17 aufweist, welcher aus der Ebene der Isolierscheibe 8 vorsteht und eine verbesserte Isolation ermöglicht.

In Figur 4 ist eine Isolierscheibe 8 gemäß einem dritten Ausführungsbeispiel der vorliegenden Erfindung dargestellt. Im Unterschied zu den Isolierscheiben der beiden vorhergehend beschriebenen Ausführungsbeispiele ist bei der Isolierscheibe 8 gemäß dem dritten Ausführungsbeispiel ein innerer Umfangsbereich 17 derart gebildet, dass er vor der Montage aus der Ebene der Isolierscheibe 8 vorsteht. Dadurch ist an der Isolierscheibe 8 eine ringförmig umlaufende Kante 19 gebildet. Um eine Montierbarkeit der Isolierscheibe 8 zu ermöglichen, weist diese mindestens einen Schlitz (nicht dargestellt) auf, welcher eine vorbestimmte Länge aufweisen kann oder welcher durchgehend ausgebildet sein kann.

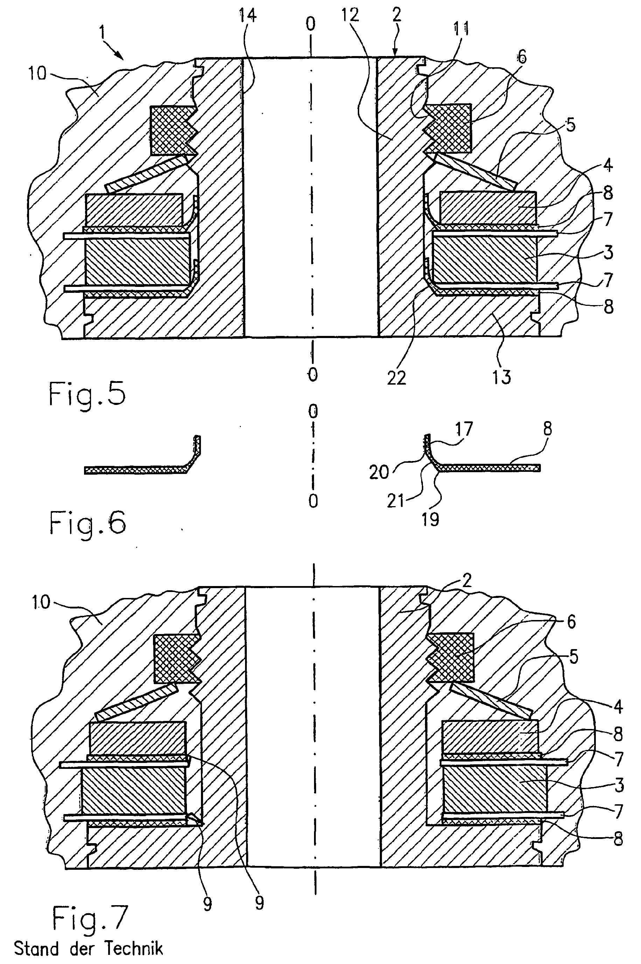

In den Figuren 5 und 6 ist ein Schwingungsaufnehmer mit einer Isolierscheibe gemäß einem vierten Ausführungsbeispiel der vorliegenden Erfindung dargestellt. Gleiche bzw. ähnliche Teile sind mit den gleichen Bezugszeichen wie in den vorangehend beschriebenen Ausführungsbeispielen bezeichnet. Das vierte Ausführungsbeispiel entspricht im Wesentlichen dem ersten Ausführungsbeispiel, sodass nachfolgend nur Unterschiede im Detail beschrieben werden.

Wie in Figur 5 gezeigt, umfasst der Schwingungsaufnehmer 1 eine Druckhülse 2, eine piezoelektrische Scheibe 3, eine seismische Masse 4, eine Tellerfeder 5, einen Gewindering 6, Kontaktscheiben 7 und Isolierscheiben 8. Der Aufbau und die Funktion dieser Elemente entspricht der im ersten Ausführungsbeispiel.

Im Unterschied zum ersten Ausführungsbeispiel weist die Druckhülse 2 des vierten Ausführungsbeispiel zwischen dem zylinderförmigen Bereich 12 und dem flanschartigen Bereich 13 einen kegelförmigen Bereich 22 auf. Je nach Ausgestaltung kann der kegelförmige Bereich 22 eine unterschiedliche Steigung bzw. Länge aufweisen. Mittels des kegelförmigen Bereichs 22 werden die Einzelteile des Schwingungsaufnehmers 1, insbesondere die untere Isolierscheibe 8, die untere Kontaktscheibe 7 und die piezoelektrische Scheibe 3 symmetrisch zur Mittelachse 0-0 ausgerichtet. Diese Ausrichtung bleibt auch während des Umspritzens der Teile mit einem Kunststoffgehäuse 10 erhalten. Weiter wird durch diesen kegelförmigen Bereich 22 der Druckhülse das Aufstellen bzw. Umbiegen des inneren Umfangsbereichs 17 der Isolierscheibe 8 erleichtert.

In Figur 6 ist die Isolierscheibe 8 gemäß dem vierten Ausführungsbeispiel im Schnitt dargestellt. Wie in Figur 6 gezeigt, ist die Isolierscheibe 8 derart ausgebildet, dass sie zwischen einer ersten umlaufenden Kante 19 und einer zweiten umlaufenden Kante 20 ebenfalls einen kegelförmigen Bereich 21 aufweist. Der kegelförmige Bereich 21 weist die gleiche Länge und die gleiche Steigung wie der kegelförmige Bereich 22 der Druckhülse 2 auf. Dadurch wird eine Anpassung der Isolierscheibe 8 an die Druckhülse 2 deutlich vereinfacht. Es sei angemerkt, dass sich die Scheiben gemäß Figur 2, 3 und 4 ebenso auf die Druckhülse mit Kegelansatz 22 anpassen, wobei sich ihr Innenrand gegen diesen Kegelansatz 22 automatisch anschmiegt.

Zusammenfassend betrifft die vorliegende Erfindung einen Schwingungsaufnehmer 1 zur mittelbaren oder unmittelbaren Befestigung an einem Schwingungen aufweisenden Bauteil, wie z.B. einem Motorblock. Der Schwingungsaufnehmer weist ein Gehäuse 10 und eine Druckhülse 2 mit einer zentralen Bohrung 14, einem zylinderförmigen Bereich 12 und einem flanschartigen Rand 13 auf. Eine piezoelektrische Scheibe 3 ist zwischen zwei Kontaktscheiben 7 angeordnet. Eine seismische Masse 4 wirkt über ein Federelement 5 und einen Gewindering 6 auf die piezoelektrische Scheibe 3. An den von der piezoelektrischen Scheibe 3 abgewandten Seiten der Kontaktscheiben 7 sind Isolierscheiben 8 angeordnet. Dabei weisen die Isolierscheiben 8 einen Innendurchmesser D1 auf, welcher kleiner als ein Außendurchmesser D2 des zylinderförmigen Bereichs 12 der Druckhülse 2 ist.

## Patentansprüche

1. Schwingungsaufnehmer zur mittelbaren oder unmittelbaren Befestigung an einem Schwingungen aufweisenden Bauteil mit einem Gehäuse (10), einer Druckhülse (2) mit einer zentralen Bohrung (14), einem zylinderförmigen Bereich (12) und einem flanschartigen Rand (13), und einer zwischen zwei Kontaktscheiben (7) angeordneten piezoelektrischen Scheibe (3), auf welche eine seismische Masse (4) wirkt, wobei an den Kontaktscheiben (7) jeweils eine Isolierscheibe (8) an der von der piezoelektrischen Scheibe (3) abgewandten Seite angeordnet ist, **dadurch gekennzeichnet, dass** mindestens eine Isolierscheibe (8) einen Innendurchmesser (D1) aufweist, welcher kleiner als ein Außendurchmesser (D2) des zylinderförmigen Bereichs (12) der Druckhülse (2) ist.

2. Schwingungsaufnehmer nach Anspruch 1, **dadurch gekennzeichnet, dass** die Isolierscheibe (8) mindestens einen Schlitz (16) am Innendurchmesser D1 aufweist, welcher eine vorbestimmte Länge aufweist.

3. Schwingungsaufnehmer nach Anspruch 1 oder 2, **dadurch gekennzeichnet, dass** die Isolierscheibe (8) genau einen an ihrem inneren Umfang (15) zu ihrem äußeren Umfang durchgehenden Schlitz (18) aufweist.

4. Schwingungsaufnehmer nach einem der Ansprüche 1 bis 3, **dadurch gekennzeichnet, dass** der Schlitz (16; 18) V-förmig ausgebildet ist.

5. Schwingungsaufnehmer nach einem der Ansprüche 1 bis 4, **dadurch gekennzeichnet, dass** der Schlitz (16) in Richtung einer Mittellinie der Isolierscheibe (8) verläuft.

6. Schwingungsaufnehmer nach einem der Ansprüche 1 bis 5, **dadurch gekennzeichnet, dass** an der Isolierscheibe (8) eine ringförmig umlaufende Kante (19, 20) ausgebildet ist, sodass ein innerer Umfangsbereich (17) der Isolierscheibe (8), in welchem Schlitze (16) gebildet sind, aus einer Ebene der Isolierscheibe (8) vorsteht.

7. Schwingungsaufnehmer nach einem der Ansprüche 1 bis 6, **dadurch gekennzeichnet, dass** an einem Übergangsbereich der Druckhülse zwischen dem zylinderförmigen Bereich (12) und dem flanschartigen Rand (13) ein kegelförmiger Bereich (22) gebildet ist.

8. Schwingungsaufnehmer nach einem der Ansprüche 1 bis 7, **dadurch gekennzeichnet, dass** die Isolierscheibe (8) zwei ringförmig umlaufende Kanten (19, 20) aufweist, welche zwischen sich einen kegelförmigen Bereich (21) bilden.

9. Schwingungsaufnehmer nach einem der Ansprüche 1 bis 8, **dadurch gekennzeichnet, dass** die beiden Isolierscheiben des Schwingungsaufnehmers gleich ausgebildet sind.

## Claims

1. Vibration pickup to be indirectly or directly fastened to a vibrating component having a housing (10), a pressure sleeve (2) having a central bore (14), a cylindrical region (12) and a flange-shaped edge (13) and a piezoelectric disc (3) arranged between two contact discs (7) which is acted upon by a seismic mass (4), an isolating disc (8) being arranged on each contact disc (7) on the side facing away from the piezoelectric disc (3), **characterized in that** at least one isolating disc (8) has an inner diameter (D1) which is smaller than an outer diameter (D2) of the cylindrical region (12) of the pressure sleeve (2).

2. Vibration pickup according to Claim 1, **characterized in that** the isolating disc (8) has at least one slot (16) of predefined length at the inner diameter (D1).

3. Vibration pickup according to Claim 1 or 2, **characterized in that** the isolating disc (8) has precisely one slot (18) running continuously from its inner circumference (15) through to its outer circumference.

4. Vibration pickup according to one of Claims 1 to 3, **characterized in that** the slot (16; 18) is of V-shaped design.

5. Vibration pickup according to one of Claims 1 to 4, **characterized in that** the slot (16) runs in the direction of a centre line of the isolating disc (8).

6. Vibration pickup according to one of Claims 1 to 5, **characterized in that** an annular circumferential angle (19, 20) is formed on the isolating disc (8) such that an inner circumferential region (17) of the isolating disc (8), in which slots (16) are formed, protrudes from a plane of the isolating disc (8).

7. Vibration pickup according to one of Claims 1 to 6, **characterized in that** a conical region (22) is formed at a transitional region of the pressure sleeve between the cylindrical region (12) and the flange-shaped edge (13).

8. Vibration pickup according to one of Claims 1 to 7, **characterized in that** the isolating disc (8) has two annular circumferential angles (19, 20) which form between them a conical region (21).

9. Vibration pickup according to one of Claims 1 to 8, **characterized in that** both isolating discs of the vibration pickup are of identical design.

## Revendications

1. Amortisseur de vibrations destiné à être fixé directement ou indirectement au niveau d'un composant présentant des vibrations, comprenant un boîtier (10), une bague (2) possédant un alésage central (14), une zone cylindrique (12) et un bord ayant la forme d'une bride (13), ainsi qu'un disque piézoélectrique (3) disposé entre deux disques de contact (7) et sur lequel agit une masse sismique (4), avec un disque isolant (8) respectivement disposé sur les disques de contact (7) du côté opposé au disque piézo-électrique (3),
**caractérisé en ce qu'**
au moins un disque isolant (8) présente un diamètre intérieur (D1) inférieur à un diamètre extérieur (D2) de la zone cylindrique (12) de la bague (2).

2. Amortisseur de vibrations selon la revendication 1,
**caractérisé en ce que**
le disque isolant (8) présente sur le diamètre intérieur D1 au moins une fente (16) ayant une longueur prédéterminée.

3. Amortisseur de vibrations selon la revendication 1 ou 2,
**caractérisé en ce que**
le disque isolant (8) présente une fente (18) précisément continue depuis sa périphérie intérieure (15) vers sa périphérie extérieure.

4. Amortisseur de vibrations selon l'une des revendications 1 à 3,
**caractérisé en ce que**
la fente (16 ; 18) est en forme de V.

5. Amortisseur de vibrations selon l'une des revendications 1 à 4,
**caractérisé en ce que**
la fente (16) s'étend en direction d'une ligne médiane du disque isolant (8).

6. Amortisseur de vibrations selon l'une des revendications 1 à 5,
**caractérisé en ce qu'**
une arête (19, 20) périphérique annulaire est formée sur le disque isolant (8), de sorte qu'une zone périphérique intérieure (17) du disque isolant (8), dans laquelle sont configurées des fentes (16), dépasse d'un plan du disque isolant (8).

7. Amortisseur de vibrations selon l'une des revendications 1 à 6,
**caractérisé en ce qu'**
une zone conique (22) est formée au niveau d'une zone de transition de la bague, entre la zone cylindrique (12) et le bord ayant la forme d'une bride (13).

8. Amortisseur de vibrations selon l'une des revendications 1 à 7,
**caractérisé en ce que**
le disque isolant (8) présente deux arêtes (19, 20) périphériques annulaires qui forment entre elles une zone conique (21).

9. Amortisseur de vibrations selon l'une des revendications 1 à 8,
**caractérisé en ce que**
les deux disques isolants de l'amortisseur de vibrations sont de forme identique.
